# EUROPÄISCHE PATENTANMELDUNG

(11) **EP 4 756 511 A1**
(43) Veröffentlichungstag der Anmeldung: **10.06.2026**
(21) Anmeldenummer: 25219854.4
(22) Anmeldetag: 01.12.2025
(51) Int. Cl.: G02B 21/00, G02B 21/06, G02B 21/36, G02B 21/16, G01N 23/205, G02B 21/14, G02B 27/58, G21K 7/00, G01N 23/041

(54) **PTYCHOGRAPHISCHES BILDGEBUNGSVERFAHREN UND -SYSTEM**

(30) Priorität: 04.12.2024 DE 102024136129; 21.11.2025 DE 102025148488
(71) Anmelder: GSI Helmholtzzentrum für Schwerionenforschung GmbH, 64291 Darmstadt (DE)
(72) Erfinder: Rothhardt, Jan, 07745 Jena (DE); Eschen, Wilhelm, 07745 Jena (DE)
(74) Vertreter: Schneiders & Behrendt Bochum

(57) **Zusammenfassung**

Die Erfindung betrifft ein Bildgebungsverfahren und ein Bildgebungssystem zur Durchführung dieses Verfahrens. Aufgabe der Erfindung ist es, ein verbessertes multispektrales ptychographisches Bildgebungsverfahren und ein entsprechendes System bereitzustellen. Hierzu weist das Bildgebungsverfahren der Erfindung die folgenden Verfahrensschritte auf: Erzeugung von zumindest teilkohärenter elektromagnetischer Strahlung (3), die spektrale Komponenten bei zumindest zwei verschiedenen Wellenlängen enthält; räumliche Trennung der spektralen Komponenten der elektromagnetischen Strahlung, insbesondere per Winkeldispersion; Erzeugen strukturierter Beleuchtungsstrahlen (9) durch Selektieren jeweils einer der spektralen Komponenten mittels einer strukturierten Apertur (8a, 8b, 8c); Bewegen eines Objektes (6) in Richtung quer zum Verlauf der Beleuchtungsstrahlen (9) in eine Mehrzahl von Positionen; Detektieren eines Intensitätsmuster für jede der Positionen, wobei die Intensitätsmuster durch Streuung und/oder Beugung der Beleuchtungsstrahlen (9) an dem Objekt (6) in einer Detektionsebene erzeugt werden; und Rekonstruieren eines Bildes des Objektes (6) aus den detektierten Intensitätsmustern, wobei für jede der zumindest zwei Wellenlängen ein Bild des Objektes (6) mittels eines ptychographischen Rekonstruktionsalgorithmus berechnet wird.

## Beschreibung

Die Erfindung betrifft ein ptychographisches Bildgebungsverfahren und ein Bildgebungssystem zur Durchführung des Verfahrens.

Die Ptychographie ist eine computergestützte Bildgebungsmethode, bei der Bilder durch die Verarbeitung zweier oder mehrerer Intensitätsmuster erzeugt werden, die durch Beugung oder Streuung von zumindest teilkohärentem Licht an einem Objekt durch Interferenz entstehen. Die Intensitätsmuster werden durch eine konstante Beleuchtungsfunktion (z.B. Fokusgeometrie der Beleuchtungsstrahlung oder Geometrie einer Apertur/Blende) erzeugt, die sich in Bezug auf das Objekt lateral, d.h. mit einer Komponente quer zum Strahlverlauf des Lichts, um einen bekannten Betrag seitlich bewegt. Die Intensitätsmuster treten in einiger Entfernung von dem Objekt auf, so dass sich die gebeugten oder gestreuten Lichtwellen der Beleuchtungsstrahlung ausbreiten, überlagern und miteinander interferieren, um so die Intensitätsmuster zu erzeugen.

Die Ptychographie kann mit jeglicher zumindest teilkohärenten Strahlung, u.a. sichtbarem Licht, Röntgenstrahlung, extremem Ultraviolett (XUV) oder auch mit Elektronenstrahlung durchgeführt werden. Im Gegensatz zu konventionellen Linsenabbildungen wird die Ptychographie nicht von linsenbedingten Aberrationen beeinflusst. Die Erzeugung der Intensitätsmuster erfolgt in der Regel linsenlos. Dies ist besonders wichtig für die Abbildung bei sehr kurzen Wellenlängen (<100nm), wo es schwierig und teuer ist, qualitativ hochwertige Objektive mit hoher numerischer Apertur herzustellen.

Ein weiterer Vorteil der Ptychographie besteht darin, dass transparente Objekte abgebildet werden können. Dies liegt daran, dass die Methode auf die Phase der Beleuchtungsstrahlung, die das Objekt passiert hat, anspricht. Im Fall der biologischen Mikroskopie mit sichtbarem Licht bedeutet dies, dass Zellen nicht gefärbt oder markiert werden müssen, um einen Kontrast zu erzeugen.

Obwohl die an dem Objekt gebeugte oder gestreute Beleuchtungsstrahlung in der Ptychographie als Intensitätsmuster detektiert wird, bedeutet die mathematische Einschränkung durch die Translationsinvarianz der Beleuchtung in Kombination mit den bekannten lateralen Verschiebungen zwischen ihnen, dass die Phase des Wellenfeldes durch eine inverse Berechnung (ptychographischer Rekonstruktionsalgorithmus) per Computer rekonstruiert werden kann. Damit können alle Informationen über das Wellenfeld der gebeugten oder gestreuten Beleuchtungsstrahlung (Amplitude und Phase) wiederhergestellt werden, und es können nahezu perfekte und quantitative Bilder des Objekts gewonnen werden, und zwar mit einer räumlichen Auflösung, die deutlich kleiner ist als die Größe des beleuchteten Bereichs auf dem Objekt. Die Anforderungen an die Beleuchtungsoptik sind vergleichsweise gering (J. Rodenburg and A. Maiden, "Ptychography" in "Springer Handbook of Microscopy", herausgegeben von P. W. Hawkes und J. C. H. Spence , Springer International Publishing, 2019, Seiten 819 bis 904).

In den vergangen Jahren haben lasergetriebene kohärente Strahlungsquellen im extremen Ultraviolett (XUV) eine enorme Performancesteigerung erfahren, womit hochaufgelöste Ptychographie im Labormaßstab möglich geworden ist. Neueste Implementierungen erreichen eine Auflösung bis in den sub-20 nm-Bereich und erlauben Bildgebung mit quantitativem Amplituden- und Phasenkontrast, einschließlich räumlich aufgelöster Materialidentifikation anhand des gemessenen komplexen Brechungsindex.

Die für die Ptychographie typischerweise verwendeten Beleuchtungslichtquellen sind inhärent breitbandig. Von dem breiten Spektrum wird in der Regel aber nur ein kleiner Teil durch spektrale Filterung verwendet. Das hat den Nachteil, dass ein großer Teil der Lichtleistung ungenutzt verloren geht.

Mit multispektraler Bildgebung lässt sich spektroskopische Information über das untersuchte Objekt gewinnen, was für viele Anwendungen nützlich ist (D. A. Shapiro et al., "Chemical composition mapping with nanometre resolution by soft X-ray microscopy," Nat. Photonics, Band. 8, Nr. 10, Seiten 765-769).

In den letzten Jahren wurden ptychographische Rekonstruktionsalgorithmen entwickelt, die auch mit spektral breitbandiger Beleuchtungsstrahlung funktionieren. Hierbei lassen sich spektroskopische Informationen aus dem zu untersuchendem Objekt gewinnen (D. J. Batey, D. Claus, and J. M. Rodenburg, "Information multiplexing in ptychography," Ultramicroscopy, Band 138, Seiten 13-21). Diese Methodik wird auch als Multiwellenlängen-Ptychographie (MWP) bezeichnet. Mittels MWP-Algorithmen lassen sich die Phasenverzögerung und Transmission im Objekt in Abhängigkeit von der Wellenlänge rekonstruieren. Die mit Überlagerung der verschiedenen spektralen Komponenten der Beleuchtungsstrahlung erzeugten und detektierten Intensitätsmuster werden also in der Weise ausgewertet, dass die Beiträge der verschiedenen spektralen Komponenten getrennt werden. Allerdings hat diese Methode den Nachteil, dass der MWP-Rekonstruktionsalgorithmus gegenüber Rauschen und anderen Messungenauigkeiten anfällig ist. Der Grund hierfür ist, dass die breitbandige Beleuchtungsstrahlung zu Intensitätsmustern führt, die sich durch eine Überlagerung vieler monochromatischer, kohärenter Beugungsbilder beschreiben lässt. Mittels MWP müssen die unterschiedlichen monochromatischen Anteile, die das gemessene Intensitätsmuster ergeben, rekonstruiert werden. Somit beinhaltet die Bilderzeugung bei MWP ein komplexes, gegenüber der monochromatischen Ptychographie deutlich schwerer und aufwendiger zu lösendes inverses Problem.

Aufgabe der Erfindung ist es, ein verbessertes multispektrales ptychographisches Bildgebungsverfahren und ein entsprechendes System bereitzustellen.

Diese Aufgabe löst die Erfindung durch ein Bildgebungsverfahren mit den folgenden Verfahrensschritten:
- Erzeugung von zumindest teilkohärenter elektromagnetischer Strahlung, die spektrale Komponenten bei zumindest zwei verschiedenen Wellenlängen enthält,
- räumliche Trennung der spektralen Komponenten der elektromagnetischen Strahlung,
- Erzeugen strukturierter Beleuchtungsstrahlen durch Selektieren jeweils einer der spektralen Komponenten mittels einer strukturierten Apertur,
- Bewegen eines Objektes in Richtung quer zum Verlauf der Beleuchtungsstrahlen in eine Mehrzahl von Positionen,
- Detektieren eines Intensitätsmuster für jede der Positionen, wobei die Intensitätsmuster durch Streuung und/oder Beugung der Beleuchtungsstrahlen an dem Objekt in einer Detektionsebene erzeugt werden, und
- Rekonstruieren eines Bildes des Objektes aus den detektierten Intensitätsmustern, wobei für jede der zumindest zwei Wellenlängen ein Bild des Objektes mittels eines ptychographischen Rekonstruktionsalgorithmus berechnet wird.

Außerdem löst die Erfindung die Aufgabe durch ein Bildgebungssystem, mit
- einer Beleuchtungslichtquelle, eingerichtet zur Erzeugung von zumindest teilkohärenter elektromagnetischer Strahlung, die spektrale Komponenten bei zumindest zwei verschiedenen Wellenlängen enthält,
- einem Trennelement, vorgesehen zur räumliche Trennung der spektralen Komponenten der elektromagnetischen Strahlung,
- einer Maske mit wenigstens einer strukturierten Apertur, vorgesehen zum Erzeugen strukturierter Beleuchtungsstrahlen durch Selektieren jeweils einer der spektralen Komponenten mittels der strukturierten Apertur,
- einem Positionierelement, vorgesehen zum Bewegen des Objektes in Richtung quer zum Verlauf der Beleuchtungsstrahlen,
- einem Flächendetektor, vorgesehen zum Detektieren von Intensitätsmustern, die durch Streuung oder Beugung der Beleuchtungsstrahlung an dem Objekt in einer durch die Ebene des Flächendetektors vorgegebenen Detektionsebene erzeugt werden,
- einer Steuereinheit, vorgesehen zum Ansteuern des Positionierelements und des Flächendetektors in der Weise, dass das Objekt sequenziell in zwei oder mehrere vorgegebene Positionen bewegt wird und mehrere Intensitätsmuster detektiert werden, wobei jeder der Positionen ein detektiertes Intensitätsmuster zugeordnet ist, und
- einen Computer, der durch Software dazu eingerichtet ist, für jede der zumindest zwei Wellenlängen ein Bild des Objektes aus den detektierten Intensitätsmustern mittels eines ptychographischen Rekonstruktionsalgorithmus zu rekonstruieren.

Die Erfindung entwickelt die herkömmliche Bildgebungstechnik der Ptychographie weiter. Es wird Beleuchtungsstrahlung zur Beleuchtung des zu untersuchenden Objekts erzeugt, und das Objekt wird mit einer Richtungskomponente quer zum Verlauf der Beleuchtungsstrahlen sukzessive in eine Mehrzahl von Positionen bewegt. Die dabei durch Streuung und/oder Brechung an dem Objekt in einer Detektionsebene erzeugten Intensitätsmuster werden für jede der Positionen detektiert. Schließlich wird ein Bild des Objektes aus den detektierten Intensitätsmustern mittels eines ptychographischen Rekonstruktionsalgorithmus berechnet.

Gemäß der Erfindung werden die spektralen Komponenten der für die Beleuchtung des Objekts verwendeten spektral breitbandigen elektromagnetischen Strahlung räumlich getrennt. Das kann beispielsweise durch Winkeldispersion (mittels eines Beugungsgitters oder eines Prismas) erfolgen, so dass die verschiedenen spektralen Komponenten unterschiedliche Ausbreitungsrichtungen aufweisen. Andere Arten der Aufspaltung der elektromagnetischer Strahlung in räumlich getrennte Komponenten, die jeweils spezifischen Wellenlängen oder Wellenlängenbereichen zugeordnet sind, sind ebenfalls denkbar, wie beispielsweise durch Strahlteiler in Kombination mit spektral selektiven Filtern.

Bei einer möglichen Ausgestaltung des erfindungsgemäßen Bildgebungssystems ist also das Trennelement zweckmäßig ein im Strahlverlauf zwischen Beleuchtungslichtquelle und Maske angeordnetes winkeldispersives optisches Element, insbesondere ein Beugungsgitter oder ein Prisma.

Die Erfindung basiert auf der Kombination der räumliche Trennung der spektralen Komponenten mit der Erzeugen strukturierter Beleuchtungsstrahlen durch Selektieren jeweils einer der spektralen Komponenten mittels einer strukturierten Apertur. Durch die räumliche Trennung ist jedem der Beleuchtungsstrahlen eine spektrale Komponente der ursprünglich erzeugten elektromagnetischen Strahlung zugeordnet, und durch die zum Selektieren verwendete strukturierte Apertur ist jeder der Beleuchtungsstrahlen entsprechend strukturiert. Die Verwendung strukturierter Beleuchtungsstrahlen verbessert die Bildqualität verglichen mit unstrukturierten Strahlen (beispielsweise Gaußstrahlen) (M. Guizar-Sicairos, M. Holler, A. Diaz, J. Vila-Comamala, O. Bunk, and A. Menzel, "Role of the illumination spatial-frequency spectrum for ptychography," Phys. Rev. B, Band 86, Nr. 10, Seite 100103; M. Odstrčil, M. Lebugle, M. Guizar-Sicairos, C. David, and M. Holler, "Towards optimized illumination for high-resolution ptychography," Opt. Express, Band 27, Nr. 10, Seite 14981). Das liegt vor allem daran, dass durch die Strukturierung des Strahls das Winkelspektrum vergrößert wird. Da das gemessene Beugungsbild sich als eine Faltung aus Objektwinkelspektrum mit Beleuchtungswinkelspektrum beschreiben lassen kann, führt ein strukturierter Strahl zu einem größeren Faltungskern. Das hat verschiedene Vorteile. Durch das größere Winkelspektrum kann eine größere beugungsbegrenzte Auflösung erreicht werden; das Intensitätsmuster wird gleichmäßiger über den Flächendetektor verteilt, wodurch die Anforderungen an den Dynamikbereich des Flächendetektors reduziert werden; außerdem führen die strukturierten Beleuchtungsstrahlen zu einer besseren Konvergenz des verwendeten ptychographischen Rekonstruktionsalgorithmus.

Unter einer strukturierten Apertur versteht die Erfindung eine beliebige optische Komponente, die zur gezielten Formung des Beleuchtungsstrahls dessen Intensitäts-, Phasen- oder Polarisationsverteilung über den Strahlquerschnitt modifiziert. Hierzu weist die strukturierte Apertur zumindest eine der folgenden räumlich variierenden Eigenschaften auf:
- Transmission und Absorption: Die elektromagnetische Strahlung Licht wird nur durch bestimmte Bereiche der Apertur hindurchgelassen, bestimmte andere Bereiche der Apertur blockieren oder dämpfen das Licht, wodurch Schattenmuster oder Intensitätsprofile erzeugt werden (wie bei einer Blende).
- Phasenmodulation: Die elektromagnetische Strahlung erfährt durch die strukturierte Apertur räumlich unterschiedliche Phasenverschiebungen, die zu entsprechenden Modifikationen der Wellenfront führen.
- Polarisation: Die Polarisationsrichtung des Lichts wird in verschiedenen Bereichen der Apertur gezielt verändert.

Im Hinblick auf die MWP ist ein Vorteil der Erfindung, dass aus den unterschiedlichen spektralen Komponenten nach deren räumlicher Trennung mittels verschiedener strukturierter Aperturen entsprechend unterschiedlich strukturierte Beleuchtungsstrahlen erzeugt werden können, d.h. dass die Beleuchtungsstrahlen bei verschiedenen Wellenlängen oder in verschiedenen Wellenlängenbereichen unterschiedliche Amplituden, Phasen- und/oder Polarisationsprofile aufweisen, so dass das Rekonstruktionsproblem einfacher und eindeutiger zu lösen ist. Intuitiv lässt sich das damit erklären, dass durch die wellenlängenabhängig unterschiedliche Strukturierung der Beleuchtungsstrahlen eine Kodierung der spektralen Komponenten erfolgt, die es dem ptychographischen Rekonstruktionsalgorithmus einfacher macht, die Beiträge der verschiedenen spektralen Komponenten zu den detektierten Intensitätsmustern zu trennen. Anders ausgedrückt besteht eine Erkenntnis der Erfindung darin, dass das der Bildrekonstruktion zugrunde liegende inverse Problem durch die erfindungsgemäße wellenlängenabhängige Strukturierung der Beleuchtungsstrahlen signifikant besser konditioniert werden kann.

Der Ansatz der Erfindung kann prinzipiell auf zwei verschiedene Arten realisiert werden:
Bei einer möglichen Ausgestaltung können die Beleuchtungsstrahlen erzeugt werden, indem zeitlich nacheinander verschiedene der spektralen Komponenten mittels der strukturierten Apertur selektiert und entsprechend zeitlich nacheinander Intensitätsmuster für die den spektralen Komponenten jeweils zugeordneten Wellenlängen detektiert werden, wobei für jede Wellenlänge ein Bild des Objektes aus den dieser Wellenlänge zugeordneten Intensitätsmustern rekonstruiert wird. Bei dieser Variante kann also eine einzelne Apertur verwendet werden, um eine spektrale Komponente auszuwählen und den Beleuchtungsstrahl räumlich zu strukturieren. Durch Justage beispielsweise eines zur räumlichen Trennung der spektralen Komponenten verwendeten winkeldispersiven optischen Elements oder der Apertur können Ptychographiemessungen für viele unterschiedliche Wellenlängen monochromatisch zeitlich nacheinander (seriell) vorgenommen werden. Dadurch lassen sich raumaufgelöste spektroskopische Informationen über das Objekt gewinnen. In diesem Fall ist es nicht notwendig, einen MWP-Algorithmus zu verwenden, sondern ein normaler, monochromatischer ptychographischer Rekonstruktionsalgorithmus ist ausreichend.

Bei einer anderen möglichen Ausgestaltung werden mehrere Beleuchtungsstrahlen gleichzeitig durch paralleles Selektieren spektraler Komponenten mittels mehrerer strukturierter Aperturen erzeugt. Dabei können die verschiedenen spektralen Komponenten zugeordneten Aperturen mit Vorteil unterschiedlich strukturiert sein, um die verschiedenen spektralen Komponenten unterschiedlich zu kodieren, wie oben beschrieben. Die Intensitätsmuster werden detektiert, während das Objekt gleichzeitig mit den mehreren Beleuchtungsstrahlen beleuchtet wird. Für diese Variante der Erfindung werden mehrere Aperturen benötigt. In diesem Fall wird ein MWP-Algorithmus zur Rekonstruktion verwendet. Dies ermöglicht es, mit nur einer Ptychographiemessung die Objekttransmissionsfunktion für mehrere Wellenlänge gleichzeitig (parallel) zu vermessen.

Zur Umsetzung dieser Variante kann bei dem verwendeten Bildgebungssystem zweckmäßig die im Strahlverlauf zwischen Trennelement und Objekt quer zum Strahlverlauf angeordnete Maske mehrere neben- und/oder übereinander angeordnete strukturierte Aperturen aufweisen. Das Selektieren einer bestimmten spektralen Komponente erfolgt in diesem Fall entsprechend der Positionierung der Apertur auf der Maske. Es können mehrere Aperturen als Array angeordnet sein. Dabei können die Aperturen auf der Maske unterschiedlich strukturiert sein, so dass die verschiedenen Wellenlängen zugeordneten Beleuchtungsstrahlen unterschiedlich strukturiert sind. In Kombination mit der Positionierung der Aperturen können so die parallel selektierten, verschiedenen spektralen Komponenten durch die Strukturierung unterschiedlich kodiert werden, wie oben beschrieben.

Vorteilhaft kann die Detektion der Intensitätsmuster, wie in der Ptychographie üblich, ohne abbildende Optik erfolgen. Abbildungsfehler von optischen Komponenten spielen somit bei der Bildgebung keine Rolle. Soweit optische Komponenten für die Beleuchtung des Objektes, d.h. zum Richten der Beleuchtungsstrahlen auf einen Bereich des Objektes verwendet werden, sollten diese möglichst achromatisch hinsichtlich der verschiedenen Beleuchtungswellenlängen sein. Bei dem Bildgebungssystem der Erfindung kann beispielsweise im Strahlverlauf zwischen Trennelement und Maske eine fokussierenden Optik angeordnet sein, die dazu vorgesehen ist, die Beleuchtungsstrahlen auf dem Objekt zu fokussieren.

Bei einer bevorzugten Ausgestaltung sollten in benachbarten Positionen mit der Beleuchtungsstrahlen beleuchtete Bereiche des Objektes räumlich überlappen. Die Überlappung ist vorteilhaft für die Konditionierung der Bildrekonstruktion anhand der Intensitätsmuster.

Das erfindungsgemäße Bildgebungsverfahren eignet sich für Beleuchtungswellenlängen im Bereich zwischen 0,01 nm und 3 mm, vorzugsweise im Röntgenbereich, im XUV-Bereich, im VIS-Bereich, im IR-Bereich, im midlR-Bereich oder im THz-Bereich. Damit werden die relevanten praktischen Anwendungsfelder der Erfindung abgedeckt.

Das erfindungsgemäße Bildgebungssystem kann bei einer möglichen Ausgestaltung so ausgebildet sein, dass das Trennelement und die Maske zueinander variabel ausricht- und/oder positionierbar sind, um die mittels der Maske selektierten spektralen Komponenten zu variieren. Beispielweise kann das winkeldispersive optische Element hierzu um eine senkrecht zur Ebene des Strahlverlaufs orientierte Achse verdrehbar sein.

Nachfolgend werden Ausführungsbeispiele der Erfindung anhand der Zeichnungen näher erläutert. Es zeigen
- Figur 1:: schematische Darstellung eines erfindungsgemäßen Bildgebungssystems in einer ersten Ausführungsform (Transmissionsaufbau);
- Figur 2:: schematische Darstellung eines erfindungsgemäßen Bildgebungssystems in einer zweiten Ausführungsform (Reflexionsaufbau);
- Figur 3:: schematische Darstellung von Masken mit strukturierten Aperturen zur Verwendung gemäß der Erfindung.

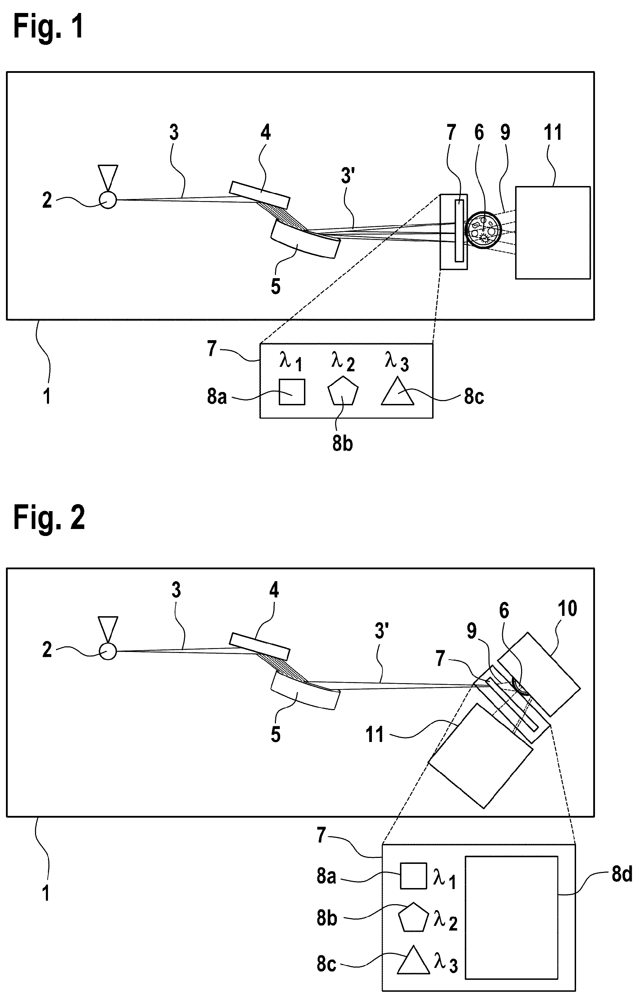

Die Figuren 1 und 2 zeigen jeweils schematisch ein Bildgebungssystem 1 für die multispektrale Ptychographie. Das System 1 umfasst eine breitbandige Beleuchtungslichtquelle 2, die kohärente elektromagnetischer Strahlung 3 mit spektralen Komponenten bei zumindest zwei verschiedenen Wellenlängen abstrahlt. Im Strahlverlauf der elektromagnetische Strahlung 3 befindet sich ein winkeldispersives optisches Element 4, beispielsweise ein Beugungsgitter, das als Trennelement zur räumliche Trennung der spektralen Komponenten der elektromagnetischen Strahlung 3 fungiert. Das winkeldispersive optische Element 4 verleiht den einzelnen spektralen Komponenten unterschiedliche Abstrahlrichtungen. Dem winkeldispersiven optischen Element 4 folgt im Strahlverlauf eine fokussierende Optik 5, beispielsweise ein Toroidspiegel, der die elektromagnetische Strahlung 3' nach der spektral selektiven räumlichen Trennung fokussiert. Zwischen der fokussierenden Optik 5 und dem Objekt 6 befindet sich im Strahlverlauf - im Fokus der Optik 5 - eine Maske 7, mit mehreren strukturieren Aperturen 8a, 8b, 8c (in den Figuren 1 und 2 unten jeweils vergrößert dargestellt). Die unterschiedlichen Strukturierungen der Aperturen 8a, 8b, 8c sind schematisch durch verschiedene geometrische Formen illustriert. Die Maske 7 mit den strukturierten Aperturen 8a, 8b, 8c erzeugen entsprechend ihrer jeweiligen räumlichen Anordnung im Strahlverlauf durch Selektieren jeweils einer der spektralen Komponenten strukturierte Beleuchtungsstrahlen 9. Ein Positionierelement 10 (nur in Figur 2 gezeigt), beispielsweise ein XY-Piezo-Positioniertisch, ist zum zweidimensionalen Bewegen des Objektes 6 mit Richtungskomponenten quer zum Verlauf der Beleuchtungsstrahlen 9 vorgesehen. Schließlich umfasst das Bildgebungssystem 1 einen Flächendetektor 11, beispielsweise ein CCD-Element, der zum Detektieren von Intensitätsmustern dient, die durch Streuung oder Beugung der Beleuchtungsstrahlen 9 an dem Objekt 6 in einer durch die Ebene des Flächendetektors 11 vorgegebenen Detektionsebene erzeugt werden. Eine Steuereinheit (nicht dargestellt), steuert das Positionierelement 10 und den Flächendetektors 11 an, so dass das Objekt 6 sequenziell in zwei oder mehrere vorgegebene Positionen bewegt wird und mehrere Intensitätsmuster mittels des Flächendetektors 11 detektiert werden, wobei jeder der Positionen ein detektiertes Intensitätsmuster zugeordnet ist. Schließlich rekonstruiert ein Computer (nicht dargestellt) für jede der zumindest zwei Wellenlängen ein Bild des Objektes 6 aus den detektierten Intensitätsmustern mittels eines ptychographischen Rekonstruktionsalgorithmus (MWP-Algorithmus).

Das Bildgebungssystem 1 der Figur 2 unterscheidet sich von demjenigen der Figur 1 dadurch, dass in Figur 2 der Flächendetektor 11 das an dem Objekt 6 reflektierte Licht erfasst, während der Flächendetektor 11 in Figur 1 das durch das Objekt 6 transmittierte Licht misst. Da das Licht in Figur 2 in Richtung der Maske 7 reflektiert wird, weist diese eine große rechteckige Apertur 8d auf, durch die das reflektierte Licht passieren kann, um dann von dem Flächendetektor 11 erfasst zu werden.

Die Erfindung basiert darauf, dass durch das winkeldispersive optische Element 4 in Verbindung mit der fokussierenden Optik 5 die spektralen Komponenten der elektromagnetischen Strahlung der Beleuchtungslichtquelle 2 auf der Maske 7, die sich direkt vor dem Objekt 6 befindet, räumlich voneinander getrennt sind. Auf der Maske 7 befinden sich die strukturierten (beispielsweise nanostrukturierten) Aperturen 8a, 8b, 8c, mit denen die gewünschte Wellenlänge jeweils ausgewählt wird. Sowohl das winkeldispersive optische Element 4, die fokussierende Optik 5 als auch die Maske 7 können durch (nicht dargestellte) Positionierer bewegt werden. Dadurch können unterschiedliche Wellenlängen ausgewählt oder auch ein Wellenlängenbereich abgetastet (gescannt) werden. Bei der Maske 7 kann es sich um eine einfach Amplitudenmaske, Phasenmaske oder auch ein kombiniertes Element handeln. Die Maske 7 wird direkt vor dem Objekt 6 platziert, so dass die Nahfeld-Transmission der Aperturen 8a, 8b, 8c auf dem Objekt zur Belichtung führt. Die Bilderzeugung funktioniert linsenlos mittels Ptychographie, wie oben beschrieben. Für jede verwendete Wellenlänge wird ein entsprechendes Bild rekonstruiert.

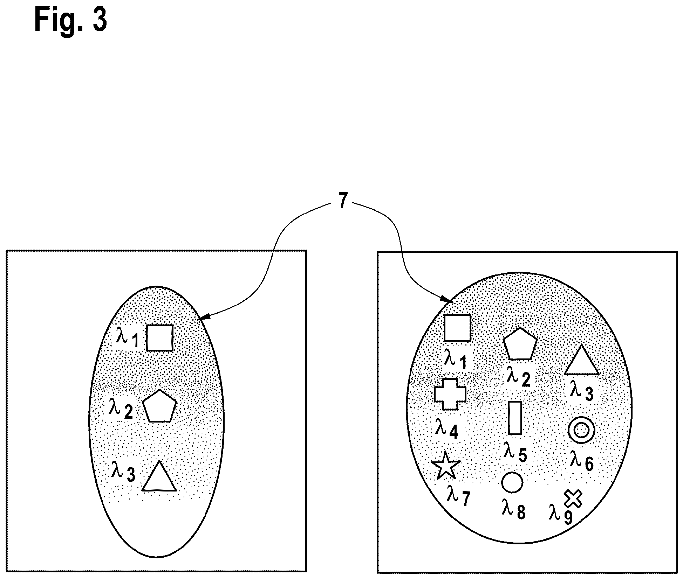

Die Figur 3 zeigt schematisch zwei Beispiele für Masken 7, die in den beschriebenen Bildgebungssystemen 1 (Figuren 1, 2) zum Einsatz kommen können. Die dispersive Trennung der spektralen Wellenlängen funktioniert bei den dargestellten Beispielen in der Weise, dass die Wellenlänge in vertikaler Richtung, d.h. von oben nach unten über die Maske 7 variiert. In dem linken Beispiel sind drei unterschiedlich strukturierte Aperturen übereinander angeordnet, die den entsprechend der vertikalen Position verschiedenen Wellenlängen λ₁, λ₂, λ₃ zugeordnet sind. Die bei den drei Wellenlängen erzeugten Beleuchtungsstrahlen sind entsprechend unterschiedlich strukturiert. Daraus ergibt sich nach dem Ansatz der Erfindung eine verbesserte multispektrale Bildrekonstruktion. In dem rechten Beispiel der Figur 3 weist die Maske 7 ein Array aus insgesamt neun strukturierten Aperturen auf. Die unterschiedlichen Strukturierungen sind durch unterschiedliche geometrische Formen schematisch illustriert. Die in einer Reihe nebeneinander angeordneten Aperturen sind, wie zu erkennen ist, in vertikaler Richtung, d.h. in Richtung der räumlichen Trennung der spektralen Komponenten, zueinander leicht versetzt. So ergibt sich die Möglichkeit, unterschiedlich strukturierte Beleuchtungsstrahlen bei insgesamt neun verschiedenen Wellenlängen λ₁ bis λ₉ zu erzeugen, und zwar mit einer spektralen Auflösung, die größer ist als es sich nach den Größen der einzelnen Aperturen eigentlich ergibt.

Der wesentliche Anwendungsvorteil der Erfindung gegenüber dem Stand der Technik ist, dass viele mikroskopische Bilder für unterschiedliche Wellenlängen schnell gemessen und rekonstruiert werden können. Die räumlich getrennte Strukturierung der Beleuchtungsstrahlen bei den unterschiedlichen Wellenlängen vereinfacht die Rekonstruktion und verbessert damit die erreichte Bildqualität entscheidend. Mit der gleichzeitigen (parallelen) Messung bei mehreren Wellenlängen kann ein entscheidender Geschwindigkeitsvorteil gegenüber herkömmlichen Verfahren erreicht werden.

## Patentansprüche

1. Bildgebungsverfahren mit den folgenden Verfahrensschritten:
- Erzeugung von zumindest teilkohärenter elektromagnetischer Strahlung (3), die spektrale Komponenten bei zumindest zwei verschiedenen Wellenlängen enthält,
- räumliche Trennung der spektralen Komponenten der elektromagnetischen Strahlung,
- Erzeugen strukturierter Beleuchtungsstrahlen (9) durch Selektieren jeweils einer der spektralen Komponenten mittels einer strukturierten Apertur (8a, 8b, 8c),
- Bewegen eines Objektes (6) in Richtung quer zum Verlauf der Beleuchtungsstrahlen (9) in eine Mehrzahl von Positionen,
- Detektieren eines Intensitätsmuster für jede der Positionen, wobei die Intensitätsmuster durch Streuung und/oder Beugung der Beleuchtungsstrahlen (9) an dem Objekt (6) in einer Detektionsebene erzeugt werden, und
- Rekonstruieren eines Bildes des Objektes (6) aus den detektierten Intensitätsmustern, wobei für jede der zumindest zwei Wellenlängen ein Bild des Objektes (6) mittels eines ptychographischen Rekonstruktionsalgorithmus berechnet wird.

2. Verfahren nach Anspruch 1, wobei die räumliche Trennung der spektralen Komponenten durch Winkeldispersion erfolgt.

3. Verfahren nach Anspruch 1 oder 2, wobei die Beleuchtungsstrahlen (9) erzeugt werden, indem zeitlich nacheinander verschiedene der spektralen Komponenten mittels der strukturierten Apertur (8a, 8b, 8c) selektiert und entsprechend zeitlich nacheinander Intensitätsmuster für die den spektralen Komponenten jeweils zugeordneten Wellenlängen detektiert werden, wobei für jede Wellenlänge ein Bild des Objektes (6) aus den dieser Wellenlänge zugeordneten Intensitätsmustern rekonstruiert wird.

4. Verfahren nach Anspruch 1 oder 2, wobei mehrere Beleuchtungsstrahlen (9) gleichzeitig durch Selektieren spektraler Komponenten mittels mehrerer strukturierter Aperturen (8a, 8b, 8c) erzeugt werden.

5. Verfahren nach Anspruch 3 oder 4, wobei die verschiedenen spektralen Komponenten zugeordneten Aperturen (8a, 8b, 8c) unterschiedlich strukturiert sind.

6. Verfahren nach Anspruch 4 oder 5, wobei die Intensitätsmuster detektiert werden, während das Objekt (6) gleichzeitig mit den mehreren Beleuchtungsstrahlen (9) beleuchtet wird.

7. Bildgebungsverfahren nach einem der Ansprüche 1 bis 5, wobei die Detektion der Intensitätsmuster ohne abbildende Optik erfolgt.

8. Bildgebungsverfahren nach einem der Ansprüche 1 bis 7, wobei die verschiedenen Wellenlängen im Bereich zwischen 0,01 nm und 3 mm liegen, vorzugsweise im Röntgenbereich, im XUV-Bereich, im VIS-Bereich, im IR-Bereich, im midIR-Bereich oder im THz-Bereich.

9. Bildgebungsverfahren nach einem der Ansprüche 1 bis 8, wobei in benachbarten Positionen mit den Beleuchtungsstrahlen (9) beleuchtete Teilbereiche des Objektes (6) räumlich überlappen.

10. Bildgebungssystem zur Durchführung des Verfahrens nach einem der Ansprüche 1 bis 9, mit
- einer Beleuchtungslichtquelle (2), eingerichtet zur Erzeugung von zumindest teilkohärenter elektromagnetischer Strahlung (3), die spektrale Komponenten bei zumindest zwei verschiedenen Wellenlängen enthält,
- einem Trennelement (4), vorgesehen zur räumliche Trennung der spektralen Komponenten der elektromagnetischen Strahlung (3),
- einer Maske (7) mit wenigstens einer strukturierten Apertur (8a, 8b, 8c), vorgesehen zum Erzeugen strukturierter Beleuchtungsstrahlen (9) durch Selektieren jeweils einer der spektralen Komponenten mittels der strukturierten Apertur (8a, 8b, 8c),
- einem Positionierelement (10), vorgesehen zum Bewegen des Objektes (6) in einer Richtung quer zum Verlauf der Beleuchtungsstrahlen (9),
- einem Flächendetektor (11), vorgesehen zum Detektieren von Intensitätsmustern, die durch Streuung oder Beugung der Beleuchtungsstrahlung (9) an dem Objekt (6) in einer durch die Ebene des Flächendetektors (11) vorgegebenen Detektionsebene erzeugt werden,
- einer Steuereinheit, vorgesehen zum Ansteuern des Positionierelements (10) und des Flächendetektors (11) in der Weise, dass das Objekt sequenziell in zwei oder mehrere vorgegebene Positionen bewegt wird und mehrere Intensitätsmuster (9) detektiert werden, wobei jeder der Positionen ein detektiertes Intensitätsmuster (9) zugeordnet ist, und
- einen Computer, der durch Software dazu eingerichtet ist, für jede der zumindest zwei Wellenlängen ein Bild des Objektes (6) aus den detektierten Intensitätsmustern (9) mittels eines ptychographischen Rekonstruktionsalgorithmus zu rekonstruieren.

11. Bildgebungssystem nach Anspruch 10, wobei das Trennelement (4) ein im Strahlverlauf zwischen Beleuchtungslichtquelle (2) und Maske (7) angeordnetes winkeldispersives optisches Element ist, insbesondere ein Beugungsgitter oder ein Prisma.

12. Bildgebungssystem nach Anspruch 10 oder 11, wobei die im Strahlverlauf zwischen Trennelement (4) und Objekt (6) angeordnete Maske (7) mehrere neben- und/oder übereinander angeordnete strukturierte Aperturen (8a, 8b, 8c) aufweist.

13. Bildgebungssystem nach Anspruch 12, wobei die Aperturen (8a, 8b, 8c) unterschiedlich strukturiert sind, so dass die verschiedenen Wellenlängen zugeordneten Beleuchtungsstrahlen (9) unterschiedlich strukturiert sind.

14. Bildgebungssystem nach einem der Ansprüche 10 bis 13, wobei das Trennelement (4) und die Maske (7) zueinander variabel ausricht- und/oder positionierbar sind, um die mittels der Maske (7) selektierten spektralen Komponenten zu variieren.

15. Bildgebungssystem nach einem der Ansprüche 10 bis 14, mit einer im Strahlverlauf zwischen Trennelement (4) und Maske (7) angeordneten fokussierenden Optik (5), dazu vorgesehen die Beleuchtungsstrahlen (9) auf dem Objekt (6) zu fokussieren.
